# FASCICULE DE BREVET EUROPEEN

(11) **EP 2 394 393 B1**
(45) Date de publication et mention de la délivrance du brevet: **31.10.2012**
(21) Numéro de dépôt: 10702141.2
(22) Date de dépôt: 03.02.2010
(51) Int. Cl.: H04L 12/24, H04L 12/56

(54) **Procédé de gestion des echanges de flux de données dans un réseau de télécommunication autonome**
Verfahren zum Verwalten von Datenstromaustauschvorgängen in einem selbstständigen Telekommunikationsnetz
Method for managing data stream exchanges in a standalone telecommunications network

(30) Priorité: 05.02.2009 FR 0950724
(43) Date de publication de la demande: 14.12.2011
(73) Titulaire: Ipanema Technologies, 92260 Fontenay aux Roses (FR)
(72) Inventeur: DELATTRE, Michel, F-92100 Boulogne Billancourt (FR); IMBERT, Bernard, F-78620 L'etang La Ville (FR)
(74) Mandataire: Ilgart, Jean-Christophe
(86) Numéro de dépôt international: PCT/EP2010/051281
(87) Numéro de publication internationale: WO 2010/089316

(56) Documents cités:
- WO-A-02/05141
- WO-A-2005/046145
- US-A1- 2001 019 554
- SMIRNOV, MIKHAIL: "Autonomic Communication" PGNET 2005, LIVERPOOL JOHN MOORES UNIVERSITY, [Online] 27 juin 2005 (2005-06-27), pages 1-62, XP002545659 LIVERPOOL, GB Extrait de l'Internet: URL:http://www.autonomic-communication.org /publications/doc/PGNet-AutoComm-Talk.pdf> [extrait le 2009-09-11]
- DOBSON S. ET AL: "A survey of Autonomic Communications" ACM, 2 PENN PLAZA, SUITE 701 - NEW YORK USA, vol. 1, no. 2, décembre 2006 (2006-12), page 223-259, XP040053275

## Description

### DOMAINE TECHNIQUE

L'invention se situe dans le domaine des réseaux de télécommunication et concerne plus spécifiquement un procédé de gestion des échanges de flux de données dans un réseau de télécommunication autonomique comportant un module central destiné à établir une politique globale définissant les règles de transfert des flux dans ledit réseau entre une pluralité de producteurs d'informations Pᵢ et une pluralité de consommateurs d'informations Cⱼ connectés audit réseau via une pluralité de moyens d'accès distribués sur ledit réseau, lesdits moyens d'accès comportant au moins un module de traitement desdits flux destiné à optimiser les paramètres de transfert de flux via le réseau, et au moins un module de décision destiné à définir dynamiquement des règles d'optimisation desdits paramètres de transfert. Ce procédé comporte en outre des étapes exécutées par au moins un module d'observation desdits flux situé entre au moins un producteur d'informations Pᵢ et au moins un consommateur d'informations Cⱼ.

L'invention concerne également un dispositif destiné à mettre en oeuvre le procédé selon l'invention.

### ÉTAT DE LA TECHNIQUE ANTÉRIEURE

Le transfert d'informations dans un réseau nécessite le déploiement d'équipements de commutation ou de routage aiguillant l'information depuis une source jusqu'à une destination à travers des moyens de transmission et des fonctions d'adaptation de l'information de manière à occuper le moins de ressources possibles et à maintenir des caractéristiques de transfert de flux malgré la concurrence des flux, ainsi que des fonctions de contrôle de l'aiguillage et de l'adaptation de manière à assurer un service de transfert optimal et sûr.

Pour assurer ces fonctions, des dispositifs supplémentaires de gestion de ressources, d'optimisation et de filtrage sont ajoutés aux dispositifs d'aiguillage pour mettre en place des mécanismes complexes de reconnaissance de flux (Deep Packet Inspection, ...), de mesures de performances, d'optimisation de l'efficacité du transfert, et de mise en adéquation des moyens de transferts et des demandes selon une discipline globale.

Ces dispositifs regroupent :
→ des modules d'observation constitués de sondes pour observer les flux,
→ des modules de traitement constitués d'actionneurs pour modifier le transfert des flux afin d'atteindre des objectifs de performances et de sécurité.
→ Des modules de décision pour définir des règles d'optimisation des paramètres de transfert des flux à travers le réseau.

Ces dispositifs supplémentaires sont agencés sur les chemins de données et leur efficacité est d'autant plus grande que la surface de réseau couverte est grande et que le périmètre est équipé.

Dans les premières générations de réseaux, ces dispositifs ont une action coordonnée par des règles initiales cohérentes calculées lors d'une phase de planification de réseau et les observations sont collectées pour juger de la pertinence et de l'efficacité du plan. La collecte est faite en un point central situé dans un système central de gestion et chargé de corréler l'ensemble des observations afin de construire une vue globale du système. Des phases d'ajustement permettent de redistribuer de nouvelles règles constituant un nouveau plan afin de faire évoluer le système en fonction des prévisions de besoins et des résultats obtenus lors des plans précédents.

Le système central distribue des règles de fonctionnement (politiques) par des flux de commande vers les éléments de réseau chargés d'appliquer ces règles. Ces derniers génèrent des événements et donnent accès en lecture à des états qui sont collectés par le système central dans des flux de gestion.

Les ressources du réseau sont donc partagées entre les flux d'informations qui traversent le réseau et les flux de commande et de gestion qui participent à la bonne marche du service de transport du réseau.

Les réseaux de télécommunication actuels sont confrontés à une convergence forte où la spécialisation a laissé place à un service unifié de transport de l'information plus flexible, plus efficace, et moins coûteux.

Cette évolution introduit une extrême variabilité des types de transfert que ces réseaux ont à traiter. Il devient alors indispensable d'adapter le transfert d'informations flux par flux, de coordonner ces adaptations de manière à retrouver un comportement global prédictible par application et d'arbitrer dynamiquement la concurrence des applications en fonction d'objectifs opérationnels.

Il devient nécessaire de passer d'un ensemble de dispositifs simples orchestrés depuis un système central à un ensemble de dispositifs pouvant agir avec la granularité « flux » et avec des temps de réponse compatibles avec des asservissements étroits entre moyens de transfert et demandes de transfert des applications.

Cette mutation se heurte aux problèmes suivants:
- augmentation du volume d'informations supplémentaires à échanger pour coordonner un système de contrôle distribué,
- lenteur de la convergence des actions distribuées,
- complexité des dispositifs à distribuer.
- difficulté d'adaptation aux pannes compte tenu de la complexité des dispositifs à distribuer, du changement de topologie, et de la diversité des applications échangeant des flux de données.

Diverses améliorations ont été apportées pour limiter l'impact du passage à l'échelle. Un exemple est donné par le brevet (WO/2002/005141) NETWORK MANAGEMENT ARRANGEMENT WITH QUERY AGGREGATION où une organisation de la collecte d'information permet une agrégation plus efficace des flux réduisant ainsi le volume d'informations de commande et de gestion et répartissant les flux de commande et de gestion sur plusieurs chemins.

Cependant, du fait de la lenteur de la boucle collecte d'informations - décision - dissémination des informations de commande et de gestion, le dispositif décrit dans ce document ne permet pas de gérer les changements rapides d'environnement.

US 2001/0019554 décrit un procéde de gestion d'échanges de flux pour réseau non autonomique. "Autonomic Communication" de M. Smirnov divulgue un noeud pouvant apprendre des régles/des politiques en fonction de mesures et de classification, ceci est fait cependant que localement.

Un premier but de l'invention est de pallier les inconvénients de l'art antérieur au moyen d'une méthode et d'une architecture autonomique permettant d'associer dans un même réseau ANA (Autonomic Network Architecture) des éléments hétérogènes complètement télécommandés depuis un coeur autonomique homogène.

Rappelons que les réseaux autonomiques comportent des blocs fonctionnels (FB - functional block) implémentés dans des noeuds du réseau ANA et des compartiments qui groupent des FBs selon des règles qui permettent d'offrir un service et d'associer dynamiquement des moyens de communication entre les FBs.

Un problème des réseaux autonomiques connus provient du fait que les FBs qui les composent ne coopèrent pas entre eux, flux d'information par flux d'information, pour minimiser les échanges de flux de gestion.

Aussi, un autre but de l'invention est de permettre à un réseau autonomique de s'organiser en permanence en fonction des flux observés et non à partir de règles définies a priori et gérées de façon centralisée.

Une mise en application des principes de système autonomique à la gestion de trafic à été présentée au "International Workshop on Traffic Management and Traffic Engineering for the Future Internet (FITraMEn 2008)".

La mise en oeuvre de tels principes se heurte à des problèmes dus à la complexité de l'algorithmie distribuée et à l'hétérogénéité des agents autonomiques ce qui se traduit par une difficulté de passage à l'échelle du fait que les agents autonomiques ont à partager une connaissance représentant un volume d'informations évoluant en NxN, N étant le nombre d'agents autonomiques de même niveau. Ils doivent converger vers une vision cohérente permettant des prises de décisions cohérentes. Ceci nécessite une réduction la connaissance partagée au minimum nécessaire pour prendre des décisions locales (principe de myopie).

La complexité de l'algorithmie distribuée provient du fait que l'information échangée par les agents autonomiques se propage avec un certain délai de transmission et une certaine probabilité de désynchronisation nécessitant de coûteux transferts de contexte.

Par ailleurs, si les constructeurs d'équipements s'entendent facilement sur des interfaces et des protocoles normalisés, il est difficile de modéliser un agent autonomique ayant de multiples interactions avec ses homologues et disposant de multiples leviers d'actions et d'observation.

Un troisième but de l'invention est de fournir un système hiérarchisé dans lequel les modules d'observation sont constitués par des dispositifs simples tels que des équipements classiques de commutation/routage qui constituent la base des réseaux, ne nécessitant aucune connaissance préalable de leurs homologues, aucun mécanisme de découverte de leur voisinage et aucune connaissance préalable de règles prédéfinies de gestion de transfert de flux via le réseau.

### EXPOSÉ DE L'INVENTION

Les buts de l'invention sont atteints au moyen d'un procédé de gestion des échanges de flux de données dans un réseau de télécommunication autonomique comportant un module central destiné à établir une politique globale définissant les règles de transfert des flux dans ledit réseau entre une pluralité de producteurs d'informations Pᵢ et une pluralité de consommateurs d'informations Cⱼ connectés audit réseau via une pluralité de moyens d'accès distribués sur ledit réseau, lesdits moyens d'accès comportant au moins au moins un module de traitement desdits flux destiné à optimiser les paramètres de transfert de flux via le réseau, et au moins un module de décision destiné à définir dynamiquement des règles d'optimisation desdits paramètres de transfert.

Le procédé selon l'invention comporte une première phase consistant à :
a - extraire par les modules de traitement de chaque flux échangé à travers le réseau des données de routage et des données de mesures de la fonction de transfert entre au moins un producteur d'informations Pᵢ et au moins un consommateur d'informations Cⱼ,
b - partager les données de routage extraites entre les modules de décision,
c - sélectionner au moins un module de décision ou moins un module de traitement pour lequel le temps d'accès aux données de mesure de la fonction de transfert est minimal,
   et une deuxième phase consistant à :
d - définir dynamiquement au moyen de l'un au moins des modules sélectionnés lesdites règles d'optimisation des paramètres de transfert du flux en fonction desdites données de mesure,
e - sélectionner des modules de traitement situés sur le chemin desdits flux pour appliquer lesdites règles de telle sorte que la fonction de transfert du flux soit accordée avec la politique globale d'échange des flux définie par le module central.
f - appliquer lesdites règles par les modules sélectionnés à l'étape e).

Selon une autre caractéristique de l'invention, les étapes a) et f) sont exécutées par au moins un module d'observation desdits flux situé entre au moins un producteur d'informations Pᵢ et au moins un consommateur d'informations Cⱼ, ledit module d'observation étant soit le premier module traversé par ce flux depuis le producteur de ce flux d'informations Pᵢ soit le dernier module traversé avant d'atteindre le consommateur ce flux d'informations Cⱼ.

Ledit module d'observation étant soit le premier module traversé par ce flux depuis le producteur de ce flux d'informations Pᵢ soit le dernier module traversé avant d'atteindre le consommateur de ce flux d'informations Cⱼ.

Préférentiellement, pour un flux donné observé, lesdits modules de traitement ou d'observation sélectionnés à l'étape e) sont le premier module traversé par le flux observé depuis son producteur et le dernier module traversé par ledit flux avant d'atteindre le consommateur.

En outre, le module de traitement filtre les flux échangés dans le réseau en fonction d'une politique de sécurité définie par le module central.

Dans une première variante de mise en oeuvre du procédé selon l'invention, si le flux observé ne traverse qu'un seul module de traitement ou d'observation entre le producteur d'informations Pᵢ et le consommateur d'informations Ci, alors l'étape e) consiste à sélectionner l'unique module traversé par ledit flux.

Selon l'invention, le module de traitement extrait des données caractéristiques du flux observé telle que signature comportementale, métriques, données d'identification, et agit directement sur les paramètres de transfert dudit flux en fonctions des données caractéristiques extraites, le module de décision collecte les données caractéristiques dudit flux extraites par le module sélectionné à l'étape e, et traite lesdites données pour détecter des changements nécessitant de définir de nouvelles règles d'actions à imposer audit module sélectionné, ou à diffuser aux autres modules de décision pour les prises de décisions sur d'autres flux et le module d'observation assure l'une au moins des fonctions suivantes :
- échanger des données de routage et de mesure avec les modules de décision et les modules de traitement,
- reconnaître des débuts et fins de flux,
- calculer une signature associée à un paquet de données,
- stocker temporairement des entêtes de paquets de données et des signatures horodatées,
- calculer des métriques élémentaires du flux échangé,
- adapter ledit flux à partir des règles définies dynamiquement par le module de décision.

En outre, ledit module de traitement extrait des données caractéristiques dudit flux telle que signature comportementale, métriques, données d'identification, et agit directement sur les paramètres de transfert dudit flux en fonctions des données caractéristiques extraites.

Préférentiellement, l'action du module de traitement comporte l'une au moins des opérations suivantes :
- filtrer ledit flux,
- sélectionner une interface de sortie pour ledit flux,
- conditionner ledit flux au niveau de l'ordonnancement des flux,
- compresser ledit flux,
- modifier les éléments de protocoles pour accélérer le transfert dudit flux.

Le procédé selon l'invention permet de distribuer dynamiquement les rôles entre les modules d'observation, les modules de traitement et les modules de décision, flux par flux, de manière à :
- minimiser les informations de contrôle à échanger,
- prendre des décisions d'action depuis le dispositif accédant au plus vite à l'information nécessaire à la prise de décision.

Le procédé selon l'invention est mis en oeuvre au moyen d'un dispositif de gestion des échanges de flux de données dans un réseau de télécommunication autonomique comportant un module central destiné à établir une politique globale définissant les règles de transfert des flux dans ledit réseau entre une pluralité de producteurs d'informations Pᵢ et une pluralité de consommateurs d'informations Cⱼ connectés audit réseau via une pluralité d'éléments fonctionnels distribués sur ledit réseau, lesdits d'éléments fonctionnels comportant au moins un module de traitement dudit flux destiné à optimiser les paramètres de transfert du flux via le réseau, et au moins un module de décision destiné à définir dynamiquement des règles pour d'optimisation desdits paramètres de transfert.

En outre, le dispositif selon l'invention comporte des modules d'observation desdits flux situés entre au moins un producteur d'informations Pᵢ et au moins un consommateur d'informations Cⱼ.

Le dispositif selon l'invention comporte :
a - des moyens pour extraire de chaque flux échangé à travers le réseau des données de routage et des données de mesure de la fonction de transfert entre au moins un producteur d'informations Pᵢ et au moins un consommateur d'informations Cⱼ,
b - des moyens pour partager les données de routage extraites entre les modules de décision,
c - des moyens pour sélectionner au moins un module de décision ou de traitement pour lequel le temps d'accès aux données de mesure de la fonction de transfert est minimal,
d - des moyens pour permettre à l'un au moins des modules sélectionnés de définir dynamiquement lesdites règles d'optimisation des paramètres de transfert du flux en fonction desdites données de mesure, et
e - des moyens pour sélectionner des modules de traitement ou d'observation situés sur le chemin desdits flux pour appliquer lesdites règles de telle sorte que la fonction de transfert du flux soit accordée avec la politique globale d'échange des flux définie par le module central.

Dans un mode préféré de réalisation, les modules d'observation de flux sont incorporés dans les équipements d'aiguillage du réseau et comportent :
- des moyens pour échanger des informations avec tous les modules de décision et tous les modules de traitement,
- des moyens pour reconnaître les débuts et les fins de chaque flux lés traversant,
- des moyens pour calculer une signature paquet,
- des moyens pour stocker temporairement des entêtes paquet et des signatures horodatées,
- des moyens pour calculer des métriques élémentaires du flux,
- des moyens pour adapter les flux les traversant en fonction de règles élémentaires établies dynamiquement pour chaque flux par les modules de décision et les modules de traitement.

En outre, lesdits modules d'observation de flux sont adaptés pour fournir les données extraites d'un flux les traversant sur la demande d'un module de décision ou de traitement et pour recevoir en retour de ce module demandeur des consignes de traitement dudit flux, et lesdits modules de décision sont aptes à se synchroniser entre eux pour constituer une base de données partagée interrogeable par tous les modules de décision et tous les modules de traitement distribués sur le réseau.

Par ailleurs, les modules de décision et les modules de traitement sont aptes à interagir pour coordonner leurs actions respectives et pour prendre des décisions flux par flux.

Dans le mode préféré de réalisation, les modules d'observation et les modules de traitement comportent chacun une première interface et une deuxième interface adaptées pour que les flux entrent dans un module d'observation ou un module de traitement via la première (respectivement deuxième) interface et sortent du module d'observation ou du module de traitement via la deuxième (respectivement première) interface, et pour que les origines (respectivement les destinations) des flux soient associables auxdits modules d'observation et auxdits modules de traitement par auto-apprentissage ou par règles de configuration.

La présence dans le dispositif selon l'invention de multiples boucles de collecte d'informations, de décision permet d'assurer une hiérarchisation des décisions (micro-décision, décision globale) au sein d'un réseau autonomique distribué. L'impact du passage à l'échelle est ainsi réduit pour les aspects rapidité d'action et finesse des actions grâce à des micro-décisions prises de façon autonome par les modules de décision disséminés à travers le réseau.

En outre, la simplicité des modules d'observation permet d'inclure ces dispositifs dans tous les équipements de commutation/routage qui constituent la base du réseau.

Le procédé et le dispositif selon l'invention permettent de déployer à grande échelle, avec un coût faible, les principes de fonctionnement des réseaux autonomiques assurant ainsi une flexibilité de déploiement de tels réseaux et permettant d'optimiser à la fois les capacités de traitement qui peuvent être mises en place progressivement dans le temps et les opérations de gestion nécessaires à la configuration de ces réseaux.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente un schéma général d'un système d'information distribué autour d'un réseau dans lequel est mis en oeuvre le procédé de contrôle distribué selon l'invention
- la figure 2 illustre schématiquement l'interaction d'éléments fonctionnels distribués dans un réseau autonomique selon l'invention,
- la figure 3 représente des exemples de flux traités par le procédé de gestion de flux selon l'invention,
- la figure 4 représente un exemple d'associations dynamiques d'éléments fonctionnels pour optimiser les échanges d'informations de contrôle des flux montrés en figure 3,
- la figure 5 représente les liens de distribution de la connaissance nécessaire à la coordination des éléments fonctionnels dans un réseau autonomique selon l'invention,
- la figure 6 représente les liens de distribution de paramètres initiaux entre les éléments fonctionnels distribués dans un réseau autonomique selon l'invention,
- la figure 7 représente un exemple de sélection des modules selon l'invention pour lequel le temps d'accès aux données de mesure de la fonction de transfert est minimal.

### EXPOSÉ DÉTAILLÉ DE MODES DE RÉALISATION PARTICULIERS

Les définitions suivantes seront utilisées dans la suite de la description :

Un Producteur d'information est un participant du réseau de communication qui délivre de l'information en utilisant les Moyens de transfert.

Un Consommateur d'information est un participant du réseau de communication qui accède à de l'information livrée par un Producteur d'information en utilisant les Moyens de transfert.

Un réseau de transit représente une capacité de transport utilisée lors des transferts d'information entre Producteurs d'information et Consommateurs d'information et est fortement partagé entre une multitude de participants (machines ou individus) d'applications en réseau.

Les moyens d'accès sont des moyens mis en oeuvre pour mettre en relation chaque participant d'applications en réseau avec le réseau de transit.

Un élément fonctionnel est un module logiciel et/ou matériel remplissant un ensemble de fonctions. Il peut être un module de traitement, un module de décision, ou un module d'observation.

Un module de traitement E3 est un élément fonctionnel pouvant observer (extraire de l'information telle que signature comportementale, métriques, identification) et agir (filtrer, sélectionner une interface de sortie, conditionner le flux au niveau de l'ordonnancement des flux, compresser, modifier les éléments de protocoles pour accélérer, ...) directement sur les flux d'information.

Un module de décision E2 est un élément fonctionnel pouvant collecter de l'information extraite par des points de traitement, traiter cette information pour détecter des changements nécessitant de pousser de nouvelles règles d'actions vers les points de traitements.

Les modules de traitement E3 et les modules de décision E2 constituent le coeur du réseau autonomique.

Un module d'observation E4 est un élément qui s'ajoute au coeur du réseau autonomique et se différencie des modules de traitement et de décision par des traitements simplifiés en fonction de paramètres dynamiques de traitement, flux par flux, qui lui sont fournis par le module de traitement et/ou par le module de décision.

Une Application d'un réseau de communication est définie par un ensemble de participants ayant des rôles de Producteurs et de Consommateurs, par la nature de l'information transférée entre les Producteurs et les Consommateurs et par la nature de l'usage de l'information par les Consommateurs.

Les éléments d'un flux d'information dits paquets comportent un moyen de connaître la destination et l'origine du flux ainsi que de déterminer le début et la fin d'un flux.

La fonction de transfert d'un flux d'information caractérise à chaque instant l'impact des Moyens de transfert sur la livraison d'informations aux Consommateurs.

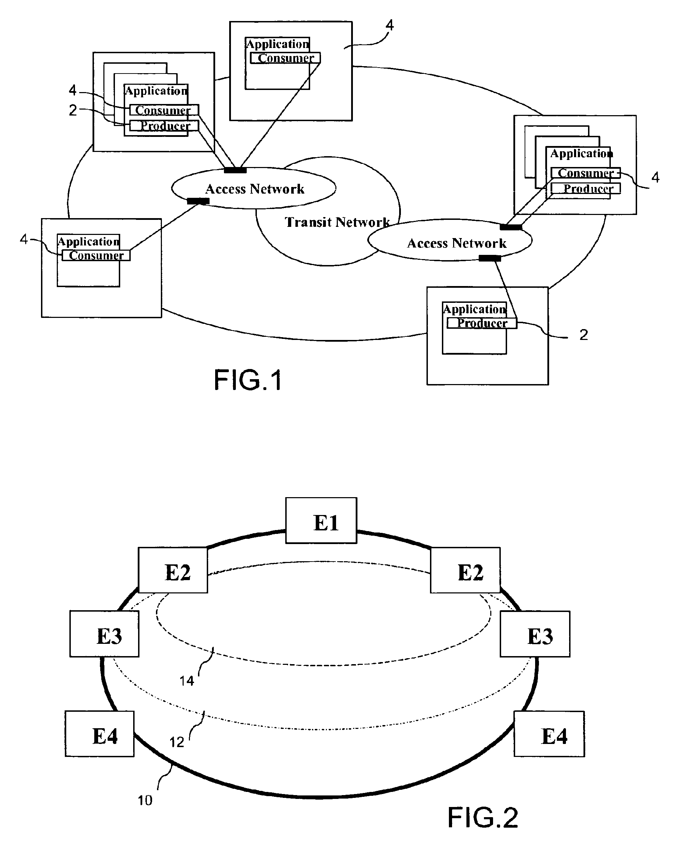

Le réseau illustré par la figure 1, comporte une pluralité de producteurs d'informations Pᵢ 2, une pluralité de consommateurs d'informations Cⱼ 4, et des moyens de transfert desdites informations entre lesdits producteurs 2 et lesdits consommateurs 4 dans le cadre d'une pluralité d'applications Aₖ.

Dans la suite de cette description, les moyens de transfert désignent l'ensemble des mécanismes permettant la livraison d'information selon un protocole d'échange défini entre producteurs 2 et consommateurs 4, le terme communication désignant à la fois le transfert d'information et le protocole d'échange entre entités communicantes ou entre entités communicantes et intermédiaires.

La Consommation d'information au sein du réseau de communication représente l'ensemble des informations exploitables par les Consommateurs et délivrées par les producteurs 2 à chaque instant.

Les producteurs 2 et les consommateurs 4 sont considérés au sens d'applications utilisant des ressources logicielles et/ou matérielles en vue de fournir un service au consommateur final.

Les applications peuvent être des applications de communication multimédia telles que la téléphonie, la visiophonie, la vidéoconférence, des applications de distribution multimédia telles que la vidéo à la demande, les diffusions, les syndications de contenu, des applications de consultation telles que les annuaires, les services interactifs WeB, des applications de partage d'information telles que les échanges peer-to-peer, les bases de données réparties, et plus généralement, des applications informatiques dont les éléments s'exécutent sur des machines éloignées et, se synchronisent et échangent de l'information à travers le réseau.

Sur la figure 2 sont illustrés quatre ensemble d'élément fonctionnel E1, E2, E3 et E4 représentant respectivement un module central destiné à établir une politique globale définissant les règles de transfert des flux dans le réseau, un module de décision, un module de traitement, et un module d'observation. Les éléments fonctionnels E1, E2, E3 et E4 sont distribués dans le réseau selon une architecture hiérarchisée comportant une pluralité de boucles concentriques 10, 12 et 14 représentant des lien entre les éléments fonctionnels E1, E2, E3 et E4.

La première boucle 10 relie tous les éléments fonctionnels du réseau pour permettre au module central E1, d'une part, de fournir les règles globales de fonctionnement aux modules E2, E3 et E4, et d'autre part, de collecter des données produites par ces modules E2, E3 et E4 suite à un transfert de flux d'information entre un producteur d'information et un consommateur d'information.

La politique globale consiste à définir des objectifs globaux de performances, de sécurité et des règles cohérentes d'arbitrage à appliquer en cas de concurrence des flux pour l'utilisation de ressources du réseau.

Le module central E1 n'intervient ni dans le traitement des flux d'informations échangés, ni dans la coordination, flux par flux, des actions menées par les modules E2, E3 et E4.

La deuxième boucle 12 relie les modules de décision E2 aux modules de traitement E3 afin de permettre à ces modules d'échanger des informations de contrôle de flux pour permettre à ces modules de coordonner leurs actions et de prendre des décisions, flux par flux. A titre d'exemple, cette boucle permet aux modules de décision E2 et aux modules de traitement E3 de coopérer pour sélectionner un chemin optimum que le flux doit emprunter, mesurer des caractéristiques de bout en bout de flux tels que le délai, la gigue et le taux de perte de paquets, fixer dynamiquement des règles cohérentes de conditionnement de flux, paramétrer les méthodes de compression et d'accélération, et exécuter une politique de sécurité. Dans ce processus, chacun des modules de décision E2 et des modules de traitement E3 peut agir uniquement en tant que point de décision, mais pas nécessairement en tant que points de traitement. Lors d'un début de flux, des règles implicites sélectionnent l'un de ces modules pour être point de décision des actions menées sur un flux.

La troisième boucle 14 relie les modules de décision E2 pour permettre à ces derniers d'élaborer une référence horaire, une base de données répartie cohérente, et des caches de données synchronisées. Elle permet également de constituer, par apprentissage, la matrice de flux permettant de déterminer, depuis n'importe quel module de décision E2, les modules de traitement E3 ou d'observation E4 traversés par un flux identifié par les champs d'entêtes de paquets.

A cet effet, les modules de décision E2 hébergent une fonction de distribution des paramètres dynamiques nécessaires à la cohérence des actions.

Les modules d'observation E4 sont ajoutés au réseau sur la première boucle 10 pour fournir les données extraites du transfert traité d'un flux sur la demande d'un module de décision E2 et pour recevoir en retour de ce module de décision les consignes nécessaires au traitement des flux qui les traversent.

A cet effet, les modules d'observation E4 comportent :
- des moyens pour échanger des informations avec tous les modules de traitement E3 et de décision E2 connus,
- des moyens pour reconnaître des débuts et des fins de flux,
- des moyens pour calculer une signature paquet,
- des moyens pour stocker temporairement des entêtes paquet, des signatures horodatées,
- des moyens pour calculer des métriques élémentaires « flux »,
- des moyens pour adapter des flux selon les divers moyens propres dont ils disposent à partir des règles élémentaires établies dynamiquement pour chaque flux par les modules de traitement E3 ou par les modules de décision E2.

Intrinsèquement, les modules d'observation E4 n'ont pas les moyens de classifier finement les flux. Ils ne peuvent pas reconnaître les applications à l'origine de ces flux telles que la voix, la vidéo, le transfert de fichiers par une analyse du contenu des paquets et des séquences des paquets permettant de reconnaître par exemple l'accès à un serveur WeB connu. En l'absence de directives venant des éléments E2 et E3, les modules d'observation E4 appliquent des règles statiques correspondant au plan distribué par l'élément central E1.

Le nombre de modules de décision et de traitement E2, E3, la répartition et le positionnement de ces modules dans l'architecture physique du réseau sont ajustables pour répondre au meilleur compromis coût-service rendu. Un déploiement faible coût peut s'appuyer sur un ensemble de modules E4 incorporés dans les équipements d'aiguillage du réseau et d'un boitier central hébergeant un module central E1 et un module de décision E2. De meilleures performances sont obtenues en plaçant des modules de traitement E3 en bordure du réseau soit au pied des moyens d'accès, soit à la jonction des réseaux de collecte avec le réseau de transit.

Le procédé selon l'invention s'applique, à titre d'exemple, dans un réseau virtuel d'entreprise comportant des équipements d'accès tels que modem, routeur, ou tout autre équipement de démarcation LAN/WAN. Certains de ces équipements rempliront les fonctions des modules d'observation E4 tandis que d'autres équipements seront dédiés aux fonctions des modules de décision E2 ou à celles des modules de traitement E3. Ces derniers seront insérés dans les sites centraux et pourront remplir à la fois des fonctions de traitement et des fonctions de décision ou uniquement des fonctions de décision sans sortir du cadre de l'invention.

Le procédé selon l'invention peut également être mis en oeuvre dans des points de présence d'un opérateur qui pourront comporter des équipements dédiés aux fonctions des modules de traitement E3 et/ou de décision E2 interagissant entre eux pour former un coeur de réseau autonomique télécommandant les équipements d'accès tels que modem, routeur, ou tout autre équipement de démarcation LAN/WAN ayant la fonction des modules d'observation E4.

Le procédé selon l'invention peut également être mis en oeuvre dans un réseau d'accès Radio selon 3GPP (3rd Generation Partnership Project) dans lequel les stations Radio dites NodeB pourraient remplir les fonctions des modules d'observation E4, et comportant des modules de décision situés à la passerelle au Réseau d'accès. Ces derniers peuvent être des modules de traitement E3 et/ou de décision E2 interagissant avec d'autres des modules de traitement E3 et/ou de décision E2 déployés dans les réseaux virtuels privés.

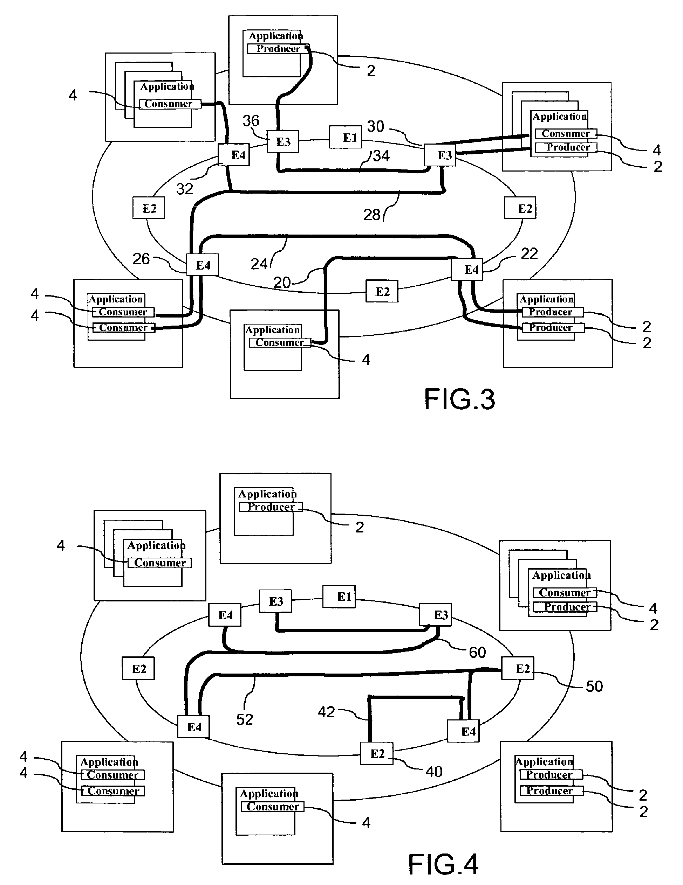

La figure 3 montre un exemple d'écoulement de flux de contrôle entre des producteurs 2 et des consommateurs 4 de flux dans un réseau autonomique selon l'invention dans lequel un premier flux de données 20 traverse un seul module d'observation 22, un deuxième flux de données 24 traverse le module d'observation 22 et un autre module d'observation 26 situés de part et d'autre d'une portion de réseau où la fonction de transfert sera contrôlée, un troisième flux de données 28 d'un producteur 2 vers deux consommateurs 4 traverse le module d'observation 26, un module de traitement 30 et un autre module d'observation 32, un quatrième flux de données 34 traversant le module de traitement 30 et un deuxième module de traitement 36.

La figure 4 montre les liens de contrôle qui s'établissent à chaque début de flux entre les différents éléments fonctionnels distribués dans le réseau.

Le module d'observation 22 fournit au module de décision 40 des informations extraites du flux de données 20. Le module de décision 40 envoie au module d'observation 22 les données nécessaires au contrôle du transfert du flux de données 20 dans un premier flux de contrôle 42.

Les modules d'observation 22 et 26 situés sur le chemin du flux de données 24 fournissent au module de décision 50 des informations extraites du flux de données 24. Le module de décision 50 élabore des règles dynamiques de configuration des moyens de transfert à partir des données qu'il reçoit et de la connaissance globale de l'état des ressources du réseau reçues via la boucle 14 à partir des autres modules de traitement et de décision distribués dans le réseau, et transmet aux modules d'observation 22 et 26 les données nécessaires au contrôle du transfert du flux de données 24 dans un deuxième flux de contrôle 52. Les modules d'observation 22 et 26 appliquent les règles élaborées dynamiquement par le module de décision 50.

Les modules d'observation 26 et 32 situés sur le chemin du flux de données 28 fournissent au module de traitement 30 des informations extraites du flux de données 28.

Le module de traitement 30 élabore des règles dynamiques de configuration des moyens de transfert à partir des données qu'il reçoit et de la connaissance globale de l'état des ressources du réseau reçues via la boucle 14 à partir des autres modules de traitement et de décision distribués dans le réseau, et transmet aux modules d'observation 26 et 32 les données nécessaires au contrôle du transfert du flux de données 28 dans un deuxième flux de contrôle 60. Les modules d'observation 26 et 32 appliquent les règles élaborées dynamiquement par Le module de décision 60.

Les modules de traitement 30 et 36 situés de part et d'autre d'une portion de réseau où la fonction de transfert du flux de données 34 sera contrôlée, se coordonnent et échangent les données de contrôle agir localement sur ce flux de données 34 en fonction de la connaissance globale de l'état des ressources du réseau reçues via la boucle 14 à partir des autres modules de traitement et de décision distribués dans le réseau.

Le procédé selon l'invention tire parti de l'ubiquité des réseaux de communications en mode paquet. Et du fait que tous les éléments fonctionnel du réseau autonomique peuvent établir entre eux dynamiquement des liens de contrôle à travers le réseau. Un flux de contrôle a une durée de vie équivalente aux flux de données. Ces flux de contrôle consomment des ressources réseau minimes par rapport aux flux de données grâce au choix de modules de décision situés au plus prés des points de traitement et grâce à l'optimisation de ce plan de contrôle flux par flux.

En outre, l'optimisation du plan de contrôle, flux par flux, assure une pertinence des actions et une précision des données de contrôle en réduisant les temps de transferts des informations de contrôle.

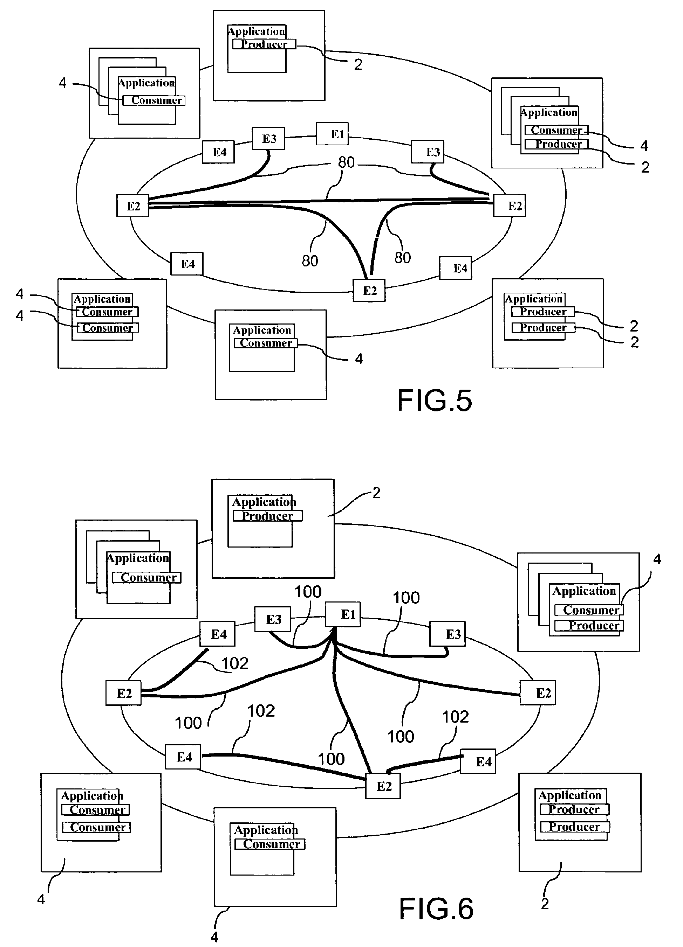

La figure 5 montre les liens 80 véhiculant les informations sur des flux observés par des modules d'observation E4 et transmises par ces modules d'observation E4 aux modules de décision E2 et de traitement E3 qui partagent ainsi une connaissance des états des ressources du réseau. Ces liens s'établissent et se défont à chaque insertion (respectivement à chaque retrait) d'un module de décision E2 dans le (respectivement du) réseau. Les modules de décision E2 se synchronisent entre eux pour assurer une distribution cohérente des états du réseau. Chaque module de traitement E3 s'attache à l'un des modules de décision E2 pour fournir les états qu'ils produisent et recevoir les états dont ils ont besoin pour prendre des décisions concernant le traitement d'un transfert de flux. Les différents modules distribués E2/E3 disposent ainsi d'un accès robuste à une connaissance commune partagée. Cette connaissance partagée peut inclure les règles d'écoulement apprises par l'observation des flux par l'ensemble des modules E2/E3/E4. Ces règles permettent de construire dynamiquement, flux par flux, le plan de contrôle illustré à la figure 4.

La figure 6 montre les liens 100 que le module central E1 a avec chaque élément fonctionnel du réseau. Ces liens 100 sont prolongés par des liens 102 pour atteindre les éléments E4 via les éléments E2. Ces liens s'établissent et se défont à chaque insertion/retrait d'un élément E2/E3/E4 dans le réseau. Le module central E1 contrôle ces opérations d'insertion/retrait et garantit ainsi une cohérence du système. Il fournit les règles globales de fonctionnement et collecte les données produites par les éléments fonctionnels distribués dans le réseau.

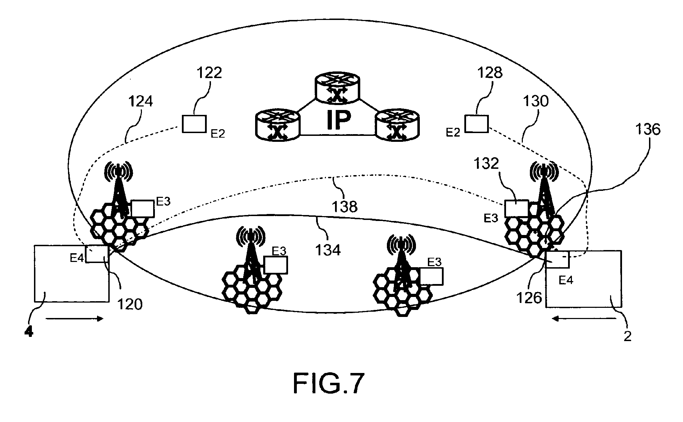

La figure 7 montre des modules d'observation 120 et 126 qui extraient de chaque flux échangé entre des consommateurs 2 et des producteurs 4 à travers le réseau des données de routage. Ces informations de routage sont fournies aux modules de décision 122 et 128 respectivement par les liens 124 et 130. Lorsqu'un flux d'information 134 s'établit entre un producteur 2 et un consommateur 4, les modules d'observation 120 et 126 détectent le début de ce flux et avertissent les modules de décision 122 et 128. Pour gérer la fonction de transfert du flux 134, dans une première phase, les modules de décision 122 et 128 sélectionnent un module de traitement 132, qui n'est pas exactement sur le chemin du flux 134 mais qui sera chargé d'en extraire les données caractéristiques en corrélant les données de mesures produites en continu par des modules d'observation.

Dans une deuxième phase, les modules de décision 122 et 128 sélectionnent les 2 modules d'observation 120 et 126 situés, respectivement, au plus prés du producteur et du consommateur. Le module de traitement sélectionné 132 a un accès rapide aux informations produites par le module d'observation 126. Il établit dynamiquement des liens de contrôle 136 et 138 avec respectivement les modules d'observation 120 et 126, et agit directement sur les paramètres de transfert du flux 134 en fonction des données caractéristiques extraites.

Dans le cadre de ce système de contrôle/commande distribué d'un Réseau R de communication, la présente invention présente une méthode d'extension de ce système à des éléments E4 dits affiliés.

La méthode selon l'invention se caractérise par une approche en quatre étapes :
a - une insertion d'élément fonctionnel dans le réseau, vérifiée par l'élément central E1,
b - un appariement de l'élément fonctionnel inséré avec un module de décision E2 permettant de pousser au fil de l'eau des données extraites des transferts d'information traités,
c - un appariement dynamique flux par flux de l'élément fonctionnel inséré, initialisé depuis un module de décision E2 ou depuis un module de traitement E3, exploitant les données obtenues par l'étape b et permettant de pousser au fil de l'eau des données extraites nécessaires au contrôle distribué,
d - un alignement par flux par lux des paramètres de traitement du transfert d'information sur des consignes issues du traitement des données obtenues à l'étape c.

L'étape a consiste à introduire un module d'observation E4 dans le réseau autonomique. Elle peut être réalisée par une pré-configuration du réseau ou par une procédure de découverte, et comporter des procédures d'authentification. Le passage à l'étape b peut résulter de avec de procédures de répartition de charge des modules de décision E2.

L'étape b fournit aux éléments fonctionnels les moyens de connaître les paramètres dynamiques d'écoulement des flux dans le réseau. Elle peut consister en une connexion logique avec le module de décision E2 initialisé par ce module de décision E2 au cours de laquelle ce dernier envoie aux modules d'observation E4 des ordres et lesdits modules d'observation E4 renvoient des réponses aux ordres reçus.

Ces envois concernent des informations événementielles ou périodiques permettant au module de décision E2 de connaître les paramètres dynamiques d'écoulement des flux dans le réseau.

Parmi ces paramètres, citons les règles d'écoulement de bout en bout apprises par une simple observation des flux et permettant de prédire un point de traitement destinataire depuis un point de traitement source.

Rappelons que, dans tout réseau en mode paquet, les paquets d'un flux comportent un moyen de désigner l'origine et le destinataire d'un flux permettant aux modules d'observation E4 de fournir leurs observations d'origine et de destination de flux aux modules de décision E2.

A partir de ces informations, les modules de décision E2 peuvent entretenir une base de données partagée interrogeable depuis les modules de décision localisés dans les modules de traitement E3 ou dans les modules de décision E2. Cette base de données pourrait aussi être construite par des règles statiques fournies par le module central E1.

En fonctionnement, lors de la détection d'un nouveau flux par un module d'observation E4, un module de décision E2 ou un module de traitement E3 utilise les informations d'origine et/ou de destination de flux pour rechercher dans la base de données les modules de décision E2 ou de traitement E3 ou d'observation E4 qui ont une bonne probabilité d'être sur le chemin du flux et pour sélectionner l'élément fonctionnel le plus prés du consommateur/producteur. Il peut alors initialiser l'étape c.

A l'étape c, les modules d'observation E4 collectent depuis un module de décision les données extraites d'un flux en un ou deux points de traitement du flux.

Parmi les données extraites, les signatures de paquet et les relevés du temps de passage peuvent être corrélés. Ces traitements de corrélation fournissent les métriques de performance de la fonction de transfert du flux.

Les données relevées des premiers paquets d'un flux permettent une classification du flux. Cette classification associe le flux à une fonction de transfert optimale et autorisée.

Le module de traitement qui réalise ces traitements de corrélation et de classification accède à travers les modules de décision E2 à une connaissance partagée. Il accède en temps réel aux caractéristiques mesurées d'une fonction de transfert et à l'état global du Réseau. Il peut ainsi se coordonner avec les autres modules de décision du réseau pour ajuster les paramètres de fonctionnement d'une fonction de transfert en fonction d'une politique globale d'optimisation et de sécurité.

A l'étape d, les modules de traitements E3 agissent, en un point distant, sur les paramètres de la fonction de transfert d'un flux. Un module de décision acquiert lors de l'étape c les capacités de traitements de flux disponibles en un point distant et ajuste les paramètres de fonctionnement de la fonction de transfert en télécommandant ces capacités de traitements telles que des fonctions de filtrage pour éliminer des flux, des fonctions de protection pour chiffrer des flux, des fonctions d'ordonnancement pour établir des priorités entre flux, des fonctions de compression pour réduire les ressources consommées pour le transfert d'un flux ou encore des fonctions d'intégrité pour réduire des erreurs de transfert d'un flux ou des fonctions d'accélération pour réduire les temps de transfert d'un flux.

Le nombre de modules de décision et de traitement E2, E3, la répartition et le positionnement de ces modules dans l'architecture physique du réseau sont ajustables pour répondre au meilleur compromis coût-service rendu. Un déploiement faible coût peut s'appuyer sur un ensemble de modules E4 incorporés dans les équipements d'aiguillage du réseau et d'un boitier central hébergeant un module central E1 et un module de décision E2. De meilleures performances sont obtenues en plaçant des modules de traitement E3 en bordure du réseau soit au pied des moyens d'accès, soit à la jonction des réseaux de collecte avec le réseau de transit.

Le procédé selon l'invention s'applique, à titre d'exemple, dans un réseau virtuel d'entreprise comportant des équipements d'accès tels que modem, routeur, ou tout autre équipement de démarcation LAN/WAN. Certains de ces équipements rempliront les fonctions des modules d'observation E4 tandis que d'autres équipements seront dédiés aux fonctions des modules de décision E2 ou à celles des modules de traitement E3. Ces derniers seront insérés dans les sites centraux et pourront remplir à la fois des fonctions de traitement et des fonctions de décision ou uniquement des fonctions de décision sans sortir du cadre de l'invention.

Le procédé selon l'invention peut également être mis en oeuvre dans des points de présence d'un opérateur qui pourront comporter des équipements dédiés aux fonctions des modules de traitement E3 et/ou de décision E2 interagissant entre eux pour former un coeur de réseau autonomique télécommandant les équipements d'accès tels que modem, routeur, ou tout autre équipement de démarcation LAN/WAN ayant la fonction des modules d'observation E4.

Le procédé selon l'invention peut également être mis en oeuvre dans un réseau d'accès Radio selon 3GPP (3rd Generation Partnership Project) dans lequel les stations Radio dites NodeB pourraient remplir les fonctions des modules d'observation E4, et comportant des modules de décision situés à la passerelle au Réseau d'accès. Ces derniers peuvent être des modules de traitement E3 et/ou de décision E2 interagissant avec d'autres des modules de traitement E3 et/ou de décision E2 déployés dans les réseaux virtuels privés.

Ce système de contrôle/commande distribué est conçu de manière additionnelle à la fonction primaire du Réseau d'aiguillage de l'information sur les moyens de transmission du réseau pour atteindre un Consommateur depuis un Producteur d'information. Les règles d'écoulement de base ne sont donc pas nécessairement modifiées. Ces règles sont suivies par les équipements de commutation/routage. Le système de contrôle/commande distribué s'adapte à ces règles de base mais peut optimiser flux par flux le temps d'un flux certaines règles d'écoulement.

L'une des méthodes pour déployer ce système est d'insérer les dispositifs additionnels sur les interfaces d'accès du réseau.

## Revendications

1. Procédé de gestion des échanges de flux de données dans un réseau de télécommunication autonomique comportant un module central destiné à établir une politique globale définissant les règles de transfert des flux dans ledit réseau entre une pluralité de producteurs d'informations Pᵢ et une pluralité de consommateurs d'informations Cⱼ connectés audit réseau via une pluralité d'éléments fonctionnels distribués sur ledit réseau, lesdits éléments fonctionnels comportant au moins un module de traitement desdits flux destiné à optimiser les paramètres de transfert de flux via le réseau, et au moins un module de décision destiné à définir dynamiquement des règles d'optimisation desdits paramètres de transfert,
procédé comportant une première phase consistant à :
a - extraire par lesdits modules de traitement de chaque flux échangé à travers le réseau des données de routage et des données de mesures de la fonction de transfert entre au moins un producteur d'informations Pᵢ et au moins un consommateur d'informations Cⱼ,
b - partager les données de routage extraites avec lesdits modules de décision,
c - sélectionner au moins un module de décision ou de traitement pour lequel le temps d'accès aux données de mesure de la fonction de transfert est minimal,
et une deuxième phase consistant à _{:}
d - définir dynamiquement par l'un au moins des modules sélectionnés lesdites règles d'optimisation des paramètres de transfert du flux en fonction desdites données de mesure,
e - sélectionner des modules de traitement situés sur le chemin desdits flux pour appliquer lesdites règles de telle sorte que la fonction de transfert du flux soit accordée avec la politique globale d'échange des flux définie par le module central.
f - appliquer lesdites règles par les modules sélectionnés à l'étape e).

2. Procédé selon la revendication 1, dans lequel les étapes a) et f) sont en outre exécutées par au moins un module d'observation desdits flux situé entre au moins un producteur d'informations Pᵢ et au moins un consommateur d'informations Cⱼ, ledit module d'observation étant soit le premier module traversé par ce flux depuis le producteur de ce flux d'informations Pᵢ soit le dernier module traversé avant d'atteindre le consommateur de ce flux d'informations Cⱼ.

3. Procédé selon la revendication 2, dans lequel, pour un flux donné, lesdits modules de traitement ou d'observation sélectionnés à l'étape e) sont respectivement le premier module traversé par ce flux depuis son producteur et le dernier module traversé avant d'atteindre le consommateur.

4. Procédé selon la revendication 3, dans lequel, pour un flux donné, si ce flux ne traverse qu'un seul module entre le producteur et le consommateur, alors on sélectionne le module traversé.

5. Procédé selon la revendication 1, dans lequel le module de traitement filtre les flux échangés dans le réseau en fonction d'une politique de sécurité définie par le module central.

6. Procédé selon la revendication 2, dans lequel le module d'observation filtre les flux échangés dans le réseau en fonction d'une politique de sécurité définie par le module central.

7. Procédé selon la revendication 2, dans lequel ledit module d'observation assure l'une au moins des fonctions suivantes :
- échanger des données de routage et de mesure avec les modules de décision et les modules de traitement,
- reconnaître des débuts et fins de flux,
- calculer une signature associée à un paquet de données,
- stocker temporairement des entêtes de paquets de données et des signatures horodatées,
- calculer des métriques élémentaires du flux échangé,
- adapter ledit flux à partir des règles définies dynamiquement par le module de décision.

8. Procédé selon la revendication 1, dans lequel ledit module de traitement :
- extrait des données caractéristiques dudit flux telle que signature comportementale, métriques, données d'identification, et
- agit directement sur les paramètres de transfert dudit flux en fonctions des données caractéristiques extraites.

9. Procédé selon la revendication 1, dans lequel ledit module de décision :
- collecte les données caractéristiques dudit flux extraites par le module sélectionné à l'étape e,
- traite lesdites données pour détecter des changements nécessitant de définir de nouvelles règles d'actions à imposer audit module sélectionné.

10. Procédé selon la revendication 5, dans lequel ledit module de traitement exécute en outre l'une au moins des opérations suivantes :
- sélectionner une interface de sortie pour ledit flux,
- conditionner ledit flux au niveau de l'ordonnancement des flux,
- compresser ledit flux,
- modifier les éléments de protocoles pour accélérer le transfert dudit flux.

11. Dispositif de gestion des échanges de flux de données dans un réseau de télécommunication autonomique comportant un module central destiné à établir une politique globale définissant les règles de transfert des flux dans ledit réseau entre une pluralité de producteurs d'informations Pᵢ et une pluralité de consommateurs d'informations Cⱼ connectés audit réseau via une pluralité d'éléments fonctionnels distribués sur ledit réseau, lesdits éléments fonctionnels comportant au moins un module de traitement dudit flux destiné à optimiser les paramètres de transfert du flux via le réseau, et au moins un module de décision destiné à définir dynamiquement des règles pour d'optimisation desdits paramètres de transfert,
dispositif comportant:
- des moyens pour extraire de chaque flux échangé à travers le réseau des données de routage et des données de mesures de la fonction de transfert entre au moins un producteur d'informations Pᵢ et au moins un consommateur d'informations Cⱼ,
- des moyens pour partager les données de routage extraites entre les modules de décision,
- des moyens pour sélectionner au moins un module de décision pour lequel le temps d'accès aux données de mesure de la fonction de transfert est minimal,
et en ce que le module de décision sélectionné comporte :
- des moyens pour définir dynamiquement lesdites règles d'optimisation des paramètres de transfert du flux en fonction desdites données de mesure,
- des moyens pour sélectionner au plus deux modules de traitement pour appliquer lesdites règles de telle sorte que la fonction de transfert du flux soit accordée avec la politique globale d'échange des flux définie par le module central.

12. Dispositif selon la revendication 11, comporte en outre au moins un module d'observation de flux incorporé dans les équipements d'aiguillage du réseau et comportant :
- des moyens pour échanger des informations avec tous les modules de décision et tous les modules de traitement,
- des moyens pour reconnaître les débuts et les fins de chaque flux les traversant,
- des moyens pour calculer une signature paquet,
- des moyens pour stocker temporairement des entêtes paquet et des signatures horodatées,
- des moyens pour calculer des métriques élémentaires du flux,
- des moyens pour adapter les flux les traversant en fonction de règles élémentaires établies dynamiquement pour chaque flux par les modules de décision et les modules de traitement.

13. Dispositif selon la revendication 12, dans lequel lesdits modules d'observation de flux sont adaptés pour fournir les données extraites d'un flux les traversant sur la demande d'un module de décision ou de traitement et pour recevoir en retour de ce module demandeur des consignes de traitement dudit flux.

14. Dispositif selon la revendication 11, dans lequel les modules de décision sont aptes à se synchroniser entre eux pour constituer une base de données partagée interrogeable par tous les modules de décision et tous les modules de traitement distribués sur le réseau.

15. Dispositif selon la revendication 11, dans lequel lesdits modules de décision et lesdits modules de traitement sont aptes à interagir pour coordonner leurs actions respectives et pour prendre des décisions flux par flux.

16. Dispositif selon la revendication 13, **caractérisé en ce que** lesdits modules d'observation et lesdits modules de traitement comportent deux types d'interfaces, soit un premier type A et un deuxième type B, les flux traversant un module d'observation ou un module de traitement depuis une interface type A (respectivement B) et sortant par une interface type B (respectivement A), et en **en ce que**, sur les interfaces de type A, les origines des flux sont associables auxdits modules d'observation et auxdits modules de traitement par auto-apprentissage ou par règles de configuration, et sur les interfaces de type B, les destinations des flux sont associables auxdits modules d'observation et auxdits modules de traitement par auto-apprentissage ou par règles de configuration.

## Claims

1. A method for managing data stream exchanges in an autonomic telecommunications network including a central module intended to establish a global policy defining the rules for transfer of streams in the said network between multiple data producers Pᵢ and multiple data consumers Cⱼ connected to the said network via multiple functional elements distributed across the said network, where the said functional elements include at least one module for processing the said streams intended to optimise the settings of the stream transfer over the network, and at least one decision-making module intended to define dynamically rules for optimising the said transfer settings,
a method comprising a first phase consisting in:
a - extracting through the said processing modules of each stream exchanged across the network routing data and measuring data of the transfer function between at least one data producer Pᵢ and at least one data consumer Cⱼ.
b - sharing the extracted routing data with the said decision-making modules,
c - selecting at least one decision-making or processing module for which the access time to the measuring data of the transfer function is minimal,
and a second phase consisting in:
d - dynamically defining by at least one of the selected modules the said rules for optimising the stream transfer settings according to the said measuring data,
e - selecting processing modules located on the path of the said streams in order to apply the said rules such that the stream transfer function is made consistent with the global stream exchange policy defined by the central module.
f - applying the said rules by the modules selected in step e).

2. A method according to claim 1, in which steps a) and f) are also executed by at least one observation module of the said streams, situated between at least one data producer Pᵢ and at least one data consumer Cⱼ, where the said observation module is either the first module traversed by this stream since the producer of this data stream Pⱼ, or the last module traversed before reaching the consumer of this data stream Cⱼ.

3. A method according to claim 2, in which, for a given observed stream, the said processing or observation modules selected in step e) are respectively the first module traversed by this stream observed from its producer, and the final module traversed before reaching the consumer.

4. A method according to claim 3, in which, for a given stream, if this stream traverses only a single module between the producer and the consumer, then the traversed module is selected.

5. A method according to claim 1, in which the processing module filters the streams exchanged in the network according to a security policy defined by the central module.

6. A method according to claim 2, in which the observation module filters the streams exchanged in the network according to a security policy defined by the central module.

7. A method according to claim 2, in which the said observation module performs at least one of the following functions:
- exchanging routing and measuring data with the decision-making modules and the processing modules,
- recognising starts and ends of streams,
- calculating a signature associated with a data packet,
- temporarily storing headers of data packets and time-stamped signatures,
- calculating elementary metrics of the exchanged stream,
- adapting the said stream using rules defined dynamically by the decision-making module.

8. A method according to claim 1, in which the said processing module:
- extracts characteristic data of the said stream such as the behavioural signature, metrics or identification data, and
- directly modifies the transfer settings of the said stream according to the extracted characteristic data.

9. A method according to claim 1, in which the said decision-making module:
- collects the characteristic data of the said stream extracted by the modules selected in step e,
- processes the said data to detect changes requiring that new action rules, to be imposed on the said selected module, are defined.

10. A method according to claim 5, in which the said processing module also performs at least one of the following operations:
- selecting an output interface for the said stream,
- configuring the said stream in terms of the sequencing of the streams,
- compressing the said stream,
- modifying the protocol elements to accelerate the transfer of the said stream.

11. A device for managing data stream exchanges in an autonomic telecommunications network including a central module intended to establish a global policy defining the rules for transfer of streams in the said network between multiple data producers Pᵢ and multiple data consumers Cⱼ connected to the said network via multiple functional elements distributed across the said network, where the said functional elements include at least one module for processing the said stream intended to optimise the settings of the stream transfer over the network, and at least one decision-making module intended to define dynamically rules for optimising the said transfer settings,
a device including:
- means for extracting from each stream exchanged across the network routing data and measuring data of the transfer function between at least one data producer Pᵢ and at least one data consumer Cⱼ,
- means for sharing the extracted routing data between the decision-making modules,
- means for selecting at least one decision-making module for which the access time to the measuring data of the transfer function is minimal,
and in that the selected decision-making module includes:
- means to define dynamically the said rules for optimising the transfer settings of the stream according to the said measuring data,
- means for selecting at most two processing modules in order to apply the said rules such that the stream transfer function is made consistent with the global stream exchange policy defined by the central module.

12. A device according to claim 11, which also includes at least one stream observation module incorporated in the network's routing equipment, and including:
- means for exchanging data with all the decision-making modules and all the processing modules,
- means for recognising the starts and ends of each stream traversing them,
- means for calculating a packet signature,
- means for temporarily storing packet headers and time-stamped signatures,
- means for calculating the stream's elementary metrics,
- means for adapting the streams traversing them according to elementary rules established dynamically for each stream by the decision-making modules and the processing modules.

13. A device according to claim 12, in which the said stream observation modules are adapted to provide the data extracted from a stream traversing them at the request of a decision-making or processing module, and to receive by return from this requesting module settings for processing the said stream.

14. A device according to claim 11, in which the decision-making modules are able to synchronise themselves with one another to constitute a shared database which can be interrogated by all the decision-making modules and all the processing modules distributed across the network.

15. A device according to claim 11, in which the said decision-making modules and the said processing modules are capable of interacting to coordinate their respective actions, and to take decisions stream-by-stream.

16. A device according to claim 13, **characterised in that** the said observation modules and the said processing modules include two types of interface, namely a first type A and a second type B, where the streams traverse an observation module or a processing module from a type A (respectively B) interface, and exit by a type B (respectively A) interface, and **in that**, in the type A interfaces, the origins of the streams can be associated with the said observation modules and with the said processing modules by self-learning or by configuration rules, and in the type B interfaces, the destinations of the streams can be associated with the said observation modules and with the said processing modules by self-learning or by configuration rules.

## Patentansprüche

1. Verfahren zum Verwalten von Datenstromaustauschvorgängen in einem autonomen Telekommunikationsnetz, das ein zentrales Modul aufweist, welches dazu bestimmt ist, eine globale Politik zu erstellen, die die Übertragungsregeln der Ströme in dem Netz definiert, und zwar zwischen einer Mehrzahl von Informationserzeugern Pᵢ und einer Mehrzahl von Informationskonsumenten Cⱼ, die mit dem Netz über eine Mehrzahl von funktionellen Elementen verbunden sind, welche über das Netz verteilt sind, wobei die funktionellen Elemente mindestens ein Modul zur Verarbeitung der Ströme, das dazu bestimmt ist, die Übertragungsparameter der Ströme über das Netz zu optimieren, und mindestens ein Entscheidungsmodul aufweist, das dazu bestimmt ist, die Regeln zur Optimierung der Übertragungsparameter dynamisch zu definieren,
wobei das Verfahren eine erste Phase aufweist, die in Folgendem besteht:
a - Extrahieren, mittels der Verarbeitungsmodule, aus jedem über das Netz ausgetauschten Strom von Routing-Daten und Messdaten der Übertragungsfunktion zwischen mindestens einem Informationserzeuger Pᵢ und mindestens einem Informationskonsumenten Cⱼ,
b - Miteinander Teilen der extrahierten Routing-Daten mit den Entscheidungsmodulen,
c - Auswählen mindestens eines Entscheidungs- oder Verarbeitungsmoduls, für welches die Zugrüfszeit auf Messdaten der Übertragungsfunktion minimal ist,
und eine zweite Phase, die in Folgendem besteht:
d - dynamisches Definieren, mittels mindestens einem der gewählten Module, der Optimierungsregeln der Übertragungsparameter des Stromes in Funktion der Messdaten,
e - Auswählen der Verarbeitungsmodule, die sich auf dem Weg der Ströme befinden, um die Regeln derart anzuwenden, dass die Übertragungsfunktion des Stromes mit der globalen Politik des Austausches von Strömen übereinstimmt, die durch das zentrale Modul definiert wurde,
f - Anwenden der Regein durch die bei Schritt e) ausgewählten Module.

2. Verfahren nach Anspruch 1, bei dem die Schritte a) und f) weiter durch mindestens ein Modul zur Beobachtung der Flüsse ausgeführt werden, das sich zwischen mindestens einem Informationserzeuger Pᵢ und mindestens einem Informationskonsumenten Cⱼ befindet, wobei das Beobachtungsmodul entweder das erste Modul, das durch diesen Strom ab dem Erzeuger dieses Informationsstroms Pᵢ durchquert wird, oder das letzte Modul ist, das durchquert wird, bevor der Konsument dieses Informationsstroms Cⱼ erreicht wird.

3. Verfahren nach Anspruch 2, bei dem es sich, für einen gegebenen Strom, bei den in Schritt e) gewählten Verarbeitungs- oder Beobachtungsmodulen um das erste Modul, das von diesem Strom ab seinem Erzeuger durchquert wird, bzw. um das letzte Modul handelt, das vor dem Erreichen des Konsumenten durchquert wird.

4. Verfahren nach Anspruch 3, bei dem, für einen gegebenen Strom, wenn dieser Strom nur ein einziges Modul zwischen dem Erzeuger und dem Konsumenten durchquert, dann das durchquerte Modul ausgewählt wird.

5. Verfahren nach Anspruch 1, bei dem das Verarbeitungsmodul die in dem Netz ausgetauschten Ströme in Funktion von einer Sicherheitspolitik filtert, die durch das zentrale Modul definiert wird.

6. Verfahren nach Anspruch 2, bei dem das Beobachtungsmodul die in dem Netz ausgetauschten Ströme in Funktion von einer Sicherheitspolitik filtert, die durch das zentrale Modul definiert wird.

7. Verfahren nach Anspruch 2, bei dem das Beobachtungsmodul für mindestens eine der folgenden Funktionen sorgt:
- austauchen der Routing-Daten und der Messdaten mit den Entscheidungsmodulen und den Verarbeitungsmodulen,
- Erkennen der Anfänge und Enden von Strömen,
- Berechnen einer Signatur, die zu einem Datenpaket gehört,
- vorübergehendes Speichern der Datenpaket-Header und der Zeitstempel-Signaturen,
- Berechnen der elementaren Metriken des ausgetauschten Stroms,
- Anpassen des Stroms ausgehend von Regeln, die durch das Entscheidungsmodul dynamisch definiert werden.

8. Verfahren nach Anspruch 1, bei dem das Verarbeitungsmodul:
- charakteristische Daten des Stroms extrahiert, wie beispielsweise Verhaltenssignatur, Metriken, Identifikationsdaten, und
- direkt auf die Übertragungsparameter des Stroms in Funktion von den extrahierten charakteristischen Daten einwirkt.

9. Verfahren nach Anspruch 1, bei dem das Entscheidungsmodul:
- die charakteristischen Daten des Stroms sammelt, die durch das bei Schritt e) ausgewählte Modul extrahiert wurden,
- die Daten verarbeitet, um Änderungen zu erfassen, die ein Definieren von neuen Aktionsregeln erforderlich maschen, die dem gewählten Modul aufzuerlegen sind.

10. Verfahren nach Anspruch 5, bei dem das Verarbeitungsmodul weiter mindestens eine der folgenden Operationen ausführt:
- Auswählen einer Ausgangsschnittsteife für den Strom,
- Konditionieren des Stroms auf Niveau der Ablaufsteuerung der Ströme,
- Komprimieren des Stroms,
- Modifizieren der Protokollelemente, um die Übertragung des Stroms zu beschleunigen.

11. Vorrichtung zum Verwalten von Datenstromaustauschvorgängen in einem autonomen Telekommunikationsnetz, das ein zentrales Modul aufweist, welches dazu bestimmt ist, eine globale Politik zu erstellen, die die Überkragungsregeln der Ströme in dem Netz definiert, und zwar zwischen einer Mehrzahl von Informationserzeugern Pᵢ und einer Mehrzahl von Informationskonsumenten Cⱼ, die mit dem Netz über eine Mehrzahl von funktionellen Elementen verbunden sind, welche über das Netz verteilt sind, wobei die funktionellen Elemente mindestens ein Modul zur Verarbeitung des Stroms, das dazu bestimmt ist, die Übertragungsparameter des Stroms über das Netz zu optimieren, und mindestens ein Entscheidungsmodul aufweist, das dazu bestimmt ist, die Regeln zur Optimierung der Übertragungsparameter dynamisch zu definieren,
wobei die Vorrichtung aufweist:
- Einrichtungen, um aus jedem über das Netz ausgetauschten Strom Routing-Daten und Messdaten der Übertragungsfunktion zwischen mindestens einem Informationserzeuger Pᵢ und mindestens einem Informationskonsumenten Cⱼ zu extrahieren,
- Einrichtungen zum miteinander Teilen der extrahierten Routing-Daten zwischen den Entscheidungsmodulen,
- Einrichtungen zum Auswählen mindestens eines Entscheidungsmoduls, für welches die Zugriffszeit auf Messdaten der Übertragungsfunktion minimal ist,
und das gewählte Entscheidungsmodul aufweist:
- Einrichtungen zum dynamischen Definieren der Optimierungsregeln der Übertragungsparameter des Stromes in Funktion der Messdaten,
- Einrichtungen zum Auswählen von höchstens zwei Verarbeitungsmodulen, um die Regeln derart anzuwenden, dass die Übertragungsfunktion des Stromes mit der globalen Politik des Austausches von Strömen übereinstimmt, die durch das zentrale Modul definiert wurde.

12. Vorrichtung nach Anspruch 11, die weiter mindestens ein Strombeobachtungsmodul aufweist, das in die Weiterleitungsgeräte des Netzes eingebaut ist und aufweist:
- Einrichtungen, um Informationen mit allen Entscheidungsmodulen und allen Verarbeitungsmodulen auszutauschen,
- Einrichtungen, um die Anfänge und Enden eines jeden diese durchquerenden Stroms zu erkennen,
- Einrichtungen, um eine Paketsignatur zu Berechnen,
- Einrichtungen, um die Paket-Header und die Zeitstempel-Signaturen vorübergehend zu speichern,
- Einrichtungen, um die elementaren Metriken des Stroms zu berechnen,
- Einrichtungen, um die diese durchquerenden Ströme in Funktion von elementaren Regeln anzupassen, die für jeden Strom dynamisch verstellt werden, und zwar durch die Entscheidungsmodule und die Verarbeitungsmodule.

13. Vorrichtung nach Anspruch 12, bei der die Strombeobachtungsmodule ausgebildet sind, um die Daten zu liefern, die aus einem diese durchquerenden Strom extrahiert werden, und zwar auf Anforderung eines Entscheidungs- oder Verarbeitungsmoduls, und um im Gegenzug von diesem anfragenden Modul Anweisungen zur Verarbeitung des Stroms zu erhalten.

14. Vorrichtung nach Anspruch 11, bei der die Entscheidungsmodule geeignet sind, sich untereinander zu synchronisieren, um eine miteinander geteilte Datenbasis zu bilden, die durch alle Entscheidungsmodule und alle Verarbeüungsmoduie, die über das Netz verteilt sind, abgefragt werden kann.

15. Vorrichtung nach Anspruch 11, bei der die Entscheidungsmodule und die Verarbeitungsmodule geeignet sind, zu interagieren, um ihre jeweiligen Aktionen zu koordinieren und um Entscheidungen Strom für Strom vorzunehmen.

16. Vorrichtung nach Anspruch 13, **dadurch gekennzeichnet, dass** die Beobachtungsmodule und die Verarbeitungsmodule zwei Typen von Schnittstellen aufweisen, und zwar einen ersten Typ A und einen zweiten Typ B, wobei die Ströme ein Beobachtungsmodul oder ein Verarbeitungsmodul ab einem Schnittstellentyp A (bzw. B) durchqueren und durch einen Schnifitstellentyp B (bzw. A) verlassen, und dadurch, dass, bei den Schnittstellen vom Typ A, die Ursprünge der Ströme den Beobachtungsmodulen und den Verarbeitungsmodulen durch Selbstlernen oder durch Konfigurationsregeln zugeordnet werden können, und, bei den Schniftstellen vom Typ B, die Ziele der Ströme den Beobachtungsmodulen und den Verarbeitungsmodulen durch Selbstlernen oder durch Konfigurationsregeln zugeordnet werden können.
